# EUROPÄISCHE PATENTSCHRIFT

(11) **EP 2 370 330 B1**
(45) Veröffentlichungstag und Bekanntmachung des Hinweises auf die Patenterteilung: **04.09.2013**
(21) Anmeldenummer: 09748035.4
(22) Anmeldetag: 28.10.2009
(51) Int. Cl.: B65G 47/86, B65G 33/04, B65G 33/32

(54) **BEHÄLTERAUFGABE**
CONTAINER FEEDING MEANS
SYSTÈME D'ALIMENTATION EN RÉCIPIENTS

(30) Priorität: 01.12.2008 DE 102008059746
(43) Veröffentlichungstag der Anmeldung: 05.10.2011
(73) Patentinhaber: KHS GmbH, 44143 Dortmund (DE)
(72) Erfinder: WOLF, Uwe, 55593 Rüdeshelm (DE); FREUND, Stefan, 55411 Bingen (DE)
(86) Internationale Anmeldenummer: PCT/EP2009/007687
(87) Internationale Veröffentlichungsnummer: WO 2010/063347

(56) Entgegenhaltungen:
- JP-A- 57 121 521
- JP-A- 2000 159 329
- NL-A- 7 300 457
- US-A- 3 565 235
- US-A- 5 477 956

## Beschreibung

Die Erfindung bezieht sich auf eine Behälteraufgabe gemäß Oberbegriff Patentanspruch 1.

Bei Anlagen zum Behandeln von Behältern, insbesondere bei in der Getränkeindustrie verwendeten Anlagen, besteht in vielen Bereichen die Notwendigkeit, Behälter, die über einen äußeren Transporteur aufrecht stehend, aber ungeordnet und z.B. auf Stoß, d.h. aneinander anliegend zulaufen, einer Behandlungsmaschine über einen Behältereinlauf oder eine Behälteraufgabe geordnet und insbesondere auch teilungsgerecht zuzuführen, d.h. so zuzuführen, dass die Behälter einen dem jeweiligen Maschinenabstand oder der jeweiligen Maschinenteilung entsprechenden Abstand voneinander aufweisen und so den innerhalb der Behandlungsmaschine vorgesehenen Behandlungspositionen mit der erforderlichen Positioniergenauigkeit zugeführt werden können. Bei den Behandlungsmaschinen handelt es sich in der Regel um solche, die die Behandlungspositionen an einem Transporteur, beispielsweise an einem umlaufenden Rotor aufweisen. Derartige Maschinen sind beispielsweise Füllmaschinen, Etikettiermaschinen, Maschinen zum Bedrucken der Behälter an ihrer Behälteraußenfläche und /oder an dort bereits vorgesehenen neutralen, d.h. nicht bedruckten Etikettenbereichen, Rinser, Inspektionsmaschinen, Verschließer usw.

Zum geordneten Zuführen und zum Beabstanden oder Vereinzeln der Behälter auf den der jeweiligen Maschinenteilung entsprechenden Abstand sind Behälteraufgaben üblich und bekannt, die jeweils aus einer seitlich an einer Transportstrecke für die Behälter angeordneten und umlaufend antreibbaren Einteil- oder Einlaufschnecke sowie aus einem in Transportrichtung der Behälter an die Einlaufschnecke anschließenden und um eine vertikale Achse umlaufend antreibbaren Transportstern bestehen.

Eine solche Transportvorrichtung ist z.B. aus der US 5 477 956 A1 bekannt, die eine Behälteraufgabe gemäß dem Oberbegriff des Anspruchs 1 offenbart.

Üblicherweise bestehen Einlaufschnecken im Wesentlichen aus einem einen Förder- oder Schneckengang aufweisenden Schneckenkörper, der auf einer beispielsweise wellen- oder dornartigen Schneckenaufnahme angeordnet und dort durch Verstiften fixiert ist. Die Behälter werden in der jeweiligen Einlaufschnecke durch die Flanke des Schneckenganges der Einlaufschnecke geführt. Da die Steigung des Schneckenganges in Transportrichtung ansteigt, erfolgt eine Beschleunigung und Vereinzelung der Behälter auf den erforderlichen, der Maschinenteilung entsprechenden Abstand. Um übermäßige Zwänge und Krafteinwirkungen der Einlaufschnecke auf die Behälter sowie umgekehrt zu vermeiden, ist es auch üblich, Einlaufschnecken bzw. deren Schneckenkörper mit einem in Transportrichtung ansteigenden oder zunehmenden Außendurchmesser auszubilden.

Die Einlaufschnecke ist im Bezug auf den anschließenden Transportstern derart positioniert, dass jeder Behälter, der mit der Einlaufschnecke an eine Behälterübergabeposition zwischen dieser Schnecke und dem Transportstern bewegt wurde, an dieser Behälterübergabeposition noch in der Einlaufschnecke bzw. in deren Schneckengang, zugleich aber auch bereits in einer Behälteraufnahme des Transportsternes zumindest teilweise aufgenommen ist und somit dann störungsfrei mit dem Transportstern weitergefördert werden kann. Dies setzt nicht nur voraus, dass die Einlaufschnecke und der Transportstern synchron miteinander und mit dem Transporteur (z.B. Rotor) der Behandlungsmaschine sowie mit angepasster Geschwindigkeit, sondern auch drehwinkelsynchron oder - angepasst angetrieben werden. Dies bedeutet, dass die Rotation der Einlaufschnecke exakt an die Rotation des Transportsternes in der Form angepasst ist, dass immer dann, wenn der Schneckengang der Einlaufschnecke die Behälterübergabeposition erreicht, sich dort auch eine Behälteraufnahme des Transportsternes befindet, d.h. zumindest in diesem Zustand der Behälteraufgabe eine möglichst exakte Anpassung der Winkelstellung der Schnecke in Bezug die Winkelstellung des Transportsternes besteht.

Für die einwandfreie Funktion der jeweiligen Behälteraufgabe und der diese Aufgabe aufweisenden Behandlungsmaschine insgesamt ist es somit wesentlich, dass die Einlaufschnecke im Bezug auf den Transportstern lagerichtig positioniert ist und auch die jeweils aktuelle Dreh- oder Winkelstellung der Einlaufschnecke einer vorgegebenen Dreh- oder Winkelstellung des Transportsternes entspricht, d.h. eine möglichst exakte Anpassung der Winkelstellung der Schnecke in Bezug die Winkelstellung des Transportsternes vorliegt.

Nach der bisherigen Praxis erfolgt die gegenüber dem nachfolgenden Transportstern ausgerichtete Montage der Einlaufschnecke so, dass deren Schneckenkörper auf die Schneckenaufnahme aufgeschoben und anschließend gegenüber dem Transportstern bzw. gegenüber einer dortigen Behälteraufnahme lagerichtig und auch im Bezug auf die Dreh- oder Winkelstellung ausgerichtet wird. Hierbei wird ein Behälter in einer an die Übergabeposition bewegten Aufnahme des Transportsternes eingesetzt, und zwar positioniert zwischen diesem Transportstern und der Einlaufschnecke bzw. dem Schneckenkörper derart, dass sich der Behälter teilweise in der Behälteraufnahme des Transportsternes und teilweise im Schneckengang der Einlaufschnecke befindet. Das Ausrichten der Einlaufschnecke bzw. die Winkeleinstellung der Schnecke erfolgt dabei durch Verdrehen des Schneckenkörpers gegenüber der Schneckenaufnahme, aber auch in manchen Fällen durch axiales Verschieben des Schneckenkörpers relativ zu der Schneckenaufnahme, sofern ein lagemäßiges Ausrichten oder Justieren der Einlaufschnecke erforderlich ist. Ist die erforderliche Einstellung der Einlaufschnecke erreicht, wird diese Einstellung durch ein Verstiften des Schneckenkörpers auf der Schneckenaufnahme gesichert, und zwar durch Vorbohren des Schneckenkörpers und der Schneckenaufnahme und durch Einbringen wenigstens eines Stiftes.

Während des Betriebes von Behandlungsmaschinen ergibt sich häufig das Problem, dass aufgrund von Verschleiß oder auch aufgrund von Maßabweichungen der zu verarbeitenden Behälter eine Neueinstellung oder Neujustierung, insbesondere auch eine neue Winkeleinstellung der Einlaufschnecke erforderlich ist. Dies ist dann bei bekannten Einlaufschnecken oder Behälteraufgaben nur dadurch möglich, dass die vorhandene Verstiftung entfernt wird und im Anschluss daran die erforderliche Neueinstellung oder Neujustierung der Einlaufschnecke bzw. des Schneckenkörpers mit abschließendem erneuten Verstiften erfolgt, und zwar mit erneutem Vorbohren des Schneckenkörpers und der Schneckenaufnahme und mit erneutem Einbringen wenigstens eines Stiftes. Dies ist zeitaufwendig und teuer, letzteres auch wegen der damit verbundenen erheblichen Maschinenstillstandszeiten. Weiterhin ist es nicht möglich, derartige Neueinstellungen oder Neujustierungen beliebig oft durchzuführen, da bei jeder Neueinstellung erneut Stiftbohrungen in die Einlaufschnecke und die Schneckenaufnahme eingebracht werden müssen, was zu einer erheblichen Schwächung dieser Bauteile führt.

Aufgabe der Erfindung ist es, eine Behälteraufgabe aufzuzeigen, die diese Nachteile vermeidet. Zur Lösung dieser Aufgabe ist eine Behälteraufgabe entsprechend dem Patentanspruch 1 ausgebildet.

Bei der erfindungsgemäßen Behälteraufgabe sind im Antriebsstrang zwischen der Einlaufschnecke bzw. dem wenigstens einen Schneckenkörper und der die Schnecke antreibende Antriebseinrichtung Kupplungs- und/oder Einstellmittel vorgesehen, die eine Einstellung oder Justierung des Drehwinkels der Einlaufschnecke oder des wenigstens einen Schneckenkörpers dieser Schnecke im Bezug auf den mit der Eintlaufschnecke zusammenwirkenden Transportstern und/oder eine Einstellung oder Justierung der Position der Einlaufschnecke im Bezug auf diesen Transportstern ermöglichen, und zwar ohne das eine vorhandene Verstiftung gelöst werden muss und nach der Einstellung bzw. Justierung ein erneutes Verstiften erforderlich ist.

Die Kupplungs- und/oder Einstellmittel, insbesondere für die Einstellung bzw. Justierung der Drehstellung bzw. des Drehwinkels der Einlaufschnecke können in unterschiedlichster Form ausgebildet sein, beispielsweise in der Form, dass für die Einstellung bzw. Justierung ein schnelles und problemloses Unterbrechen der Antriebsverbindung zwischen der Einlaufschnecke und der Antriebseinrichtung und nach der Einstellung bzw. Justierung ein ebenso schnelles und problemloses Wiederherstellen der Antriebsverbindung möglich ist, beispielsweise durch eine Klemmverbindung, durch eine eine Rasterung oder Verzahnung, insbesondere Feinverzahnung aufweisende Kupplungseinrichtung. Weiterhin kann die Winkeleinstellung durch eine in die Schneckenaufnahme integrierte Verstelleinrichtung und/oder aber dadurch erfolgen, dass im Antriebsstrang eine eine Drehverstellung ermöglichende Getriebeanordnung, beispielsweise ein Differenzial-Getriebe vorgesehen ist.

Weiterbildungen, Vorteile und Anwendungsmöglichkeiten der Erfindung ergeben sich auch aus der nachfolgenden Beschreibung von Ausführungsbeispielen und aus den Figuren.
Weiterhin erstreckt sich die vorliegende Erfindung auch auf solche Einteil- oder Förderschnecken, die dazu verwandt werden, bereits auf Maschinenteilung befindliche Behälter von einem Anlageteil zum einem anderen Anlageteil zu überführen. Derartige Überführungsschnecken kommen innerhalb der Getränkeindustrie beispielsweise dann zum Einsatz, wenn unterschiedliche Behälter- oder Produkttypen auf unterschiedliche Weisen verschlossen werden sollen.
Weiterhin erstreckt sich die vorliegende Erfindung auch auf solche Einteil- oder Förderschnecken, welche im Wesentlichen zur Stabilisierung der Behälter dienen, und zwar in der Art, dass diese Schnecken die Behälter als Geländerersatz führen und gegen ein Umfallen sichern.
Zur Vereinfachung und zur Verbesserung der Lesbarkeit der vorliegenden Anmeldung wird nachfolgend weiterhin ausschließlich von Einlaufschnecken gesprochen, wobei selbstverständlich alle gemachten Aussagen analog für die vorstehend erwähnten Überführungs- oder Führungsschnecken gelten.

Die Erfindung wird im Folgenden anhand der Figuren an einem Ausführungsbeispiel näher erläutert. Es zeigen:
- Fig. 1: in schematischer Darstellung und in Draufsicht eine Behandlungsmaschine umlaufender Bauart zum Behandeln von Behältern in Form von Flaschen;

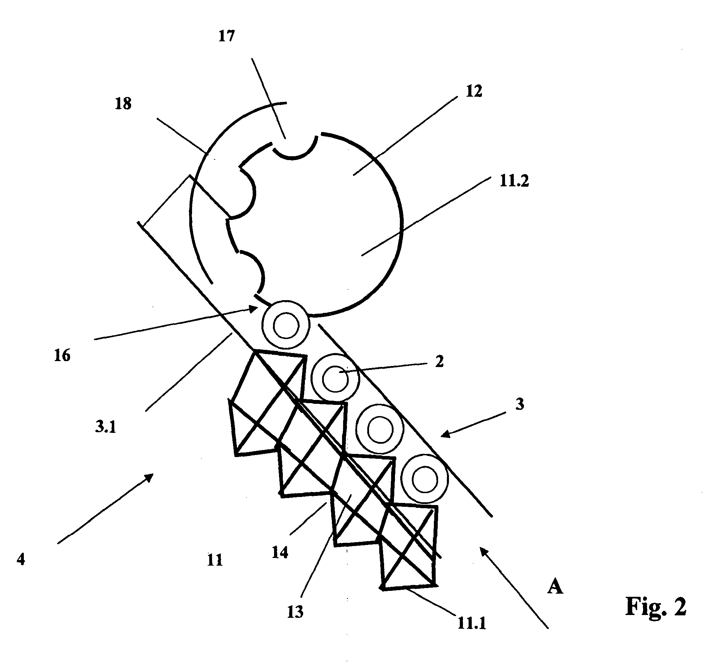

- Fig. 2: in schematischer Einzeldarstellung die von einer Einteil- oder Einlaufschnecke und einem anschließenden Einlaufstern gebildete Behälteraufgabe der Behandlungsmaschine der Figur 1;
- Fig. 3: in Teildarstellung und im Längsschnitt die Einlaufschnecke der Behälteraufgabe der Behandlungsmaschine der Figur 1;
- Fig. 4: in sehr vereinfachter Darstellung Längsschnitt die Einlaufschnecke der Behälteraufgabe bei einer weiteren Ausführungsform.

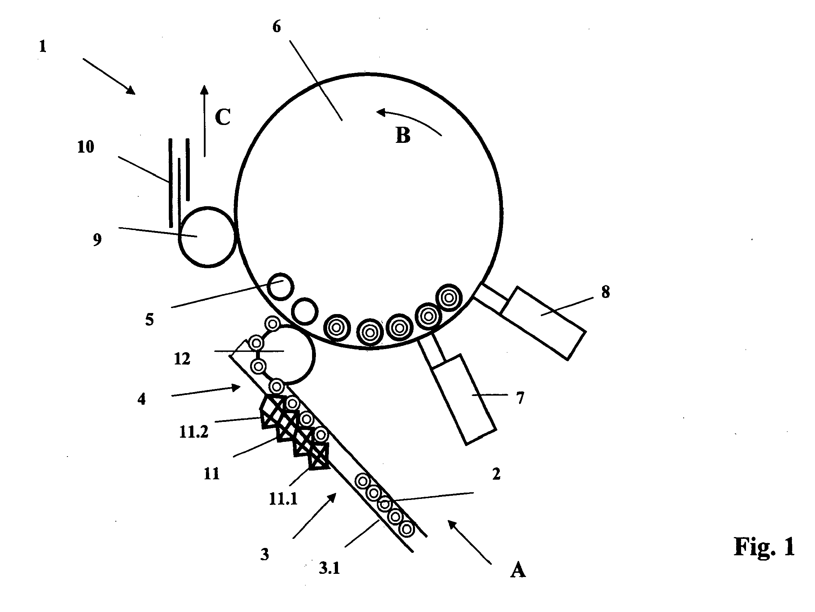

In den Figuren ist 1 eine Behandlungsmaschine zum Behandeln von Behältern in Form von Flaschen 2. Die Behandlungsmaschine 1 ist bei der in der Figur 1 dargestellten Ausführungsform eine Etikettiermaschine.

Die zu behandelnden bzw. zu etikettierenden Flaschen 2 werden der Behandlungsmaschine 1 in einem einspurigen Behälter- oder Flaschenstrom, in welchem die Flaschen 2 auf Stoß, d.h. dicht aneinander anschließend angeordnet sind, über einen äußeren Transporteur 3 aufrecht stehend in einer Transportrichtung A zugeführt und gelangen über eine Behälteraufgabe 4 der Behandlungsmaschine 1 jeweils an eine Behandlungsposition 5, die mit einer Vielzahl gleichartiger Behandlungspositionen 5 am Umfang eines um eine vertikale Maschinenachse in Richtung des Pfeils B umlaufend antreibbaren Rotor 6 vorgesehen ist. Die Behandlungspositionen 5 sind in gleichmäßigen Winkelabständen, die der Maschinenteilung entsprechen, am Umfang des Rotors 6 vorgesehen.

Jede an eine Behandlungsposition 5 übergebende Flasche 2 wird mit dem umlaufenden Rotor 6 an zwei Etikettieraggregaten 7 und 8 vorbei bewegt, die zum Aufbringen von zwei Etiketten auf jede Flasche 2, beispielsweise zum Aufbringen eines Rumpf-Etiketts und eines Brust-Etiketts auf jede Flasche 2 an der Peripherie des Rotors 6 mit diesem nicht mitbewegt vorgesehen sind. Die behandelten, d.h. etikettierten Flaschen 2 werden der jeweiligen Behandlungsposition 5 an einem von einem Transport- oder Auslaufstern 9 gebildeten Behälterauslauf entnommen und an einem äußeren Transporteur 10 weitergeleitet, über den die behandelten, d.h. etikettierten Flaschen 2 einer weiteren Verwendung, beispielsweise einem Packer in Richtung des Pfeils C zugeführt werden.

Die Behälteraufgabe 4 besteht bei der dargestellten Ausführungsform im Wesentlichen aus einer Einlaufschnecke 11 und aus einem an diese Einlaufschnecke 11 in der Transportrichtung A anschließenden Einlaufstern 12. Die Einlaufschnecke 11 ist in der bekannten Weise in dem die Behälteraufgabe 4 bildenden Teil des äußeren Transporteurs 3 seitlich von der von diesem Transporteur gebildeten Transportstrecke angeordnet, und zwar in der Form, dass die Längsachse AS der Einlaufschnecke 11 bzw. des z.B. aus einem verschleißfesten Kunststoff hergestellten Schneckenkörpers 13 der Einlaufschnecke 11 horizontal oder im Wesentlichen horizontal sowie parallel oder im Wesentlichen parallel zur Transportrichtung A des äußeren Transporteurs 3 angeordnet sind. Am Umfang ihres Schneckenkörper 13 ist die Einlaufschnecke 11 mit einem Förder- oder Schneckengang 14 ausgebildet, der sich von dem bezogen auf die Transportrichtung A vorderen, dem Einlaufstern 12 entfernt liegenden Schneckenende 11.1 bis an das in Transportrichtung A rückwärtige, dem Einlaufstern 12 unmittelbar benachbarte Schneckenende 11.2 erstreckt und in Transportrichtung A eine zunehmende Steigung aufweist. Außerdem nimmt der Außendurchmesser des Schneckenkörpers 13 in Transportrichtung A, d.h. vom Schneckenende 11.1 zum Schneckenende 11.2 hin zu.

Mit 15 ist eine wellenartige Schneckenaufnahme bezeichnet, auf der der Schneckenkörper 13 angeordnet ist und die sich durch den Schneckenkörper 13 über die gesamte Länge der Eintlaufschnecke 11 erstreckt. Die Schneckenaufnahme 15 ist um die Achse AS der Einlaufschnecke 11 drehbar gelagert. Der Schneckenkörper 13 ist in der nachstehend noch näher beschriebenen Weise auch antriebsmäßig mit der Schneckenaufnahme 15 verbunden.

Jede an dem Behälteraufgabe geförderte Flasche 2 wird mit einem Teilbereich ihres Umfangs in dem Schneckengang 14 aufgenommen und mit der um die Achse AS umlaufend angetriebenen Einlaufschnecke 11 aufgrund der zunehmenden Steigung des Schneckenganges 14 so beschleunigt, dass die Flaschen 2 schließlich am Schneckenende 11.2 bzw. an einer dortigen Übergabeposition 16 mit der Maschinenteilung an den Einlaufstern 12 übergeben werden. Der äußere Transporteur 3 ist mit seitlichen Führungsgeländern 3.1 versehen, sodass sich die im Schneckengang 14 der Einlaufschnecke 11 aufgenommenen Flaschen 2 seitlich, d.h. an ihrem aus den Schneckengang vorstehenden Umfangsbereich an einem Führungsgeländer 3.1 abstützen können.

Der Einlaufstern 12 ist an seinem Umfang mit einer Vielzahl von zum Umfang hin offenen taschenartigen Ausnehmungen bzw. Behälteraufnahmen 17 versehen, die jeweils zur Aufnahme einer Flasche 2 dienen und die um die vertikale Achse des Einlaufsternes 12 in gleichmäßigen Winkelabständen verteilt vorgesehen sind, welche wiederum der Maschinenteilung entsprechen. Um die Flaschen 2 in den Behälteraufnahmen 17 des Einlaufsternes 12 zu sichern, ist in bekannter Weise ein Führungsbogen vorgesehen, der in den Figuren schematisch mit 18 angedeutet ist und der eine Anlagefläche für den aus den Behälteraufnahmen 17 vorstehenden Teil der Flaschen 2 bildet.

Um die Übergabe der zunächst auf Stoß über den äußeren Transporteur 3 zugeführten und dann auf die Maschinenteilung gebrachten Flaschen 2 an jeweils eine Behandlungsposition 5 zu ermöglichen, ist es u.a. erforderlich, dass die Einlaufschnecke 11 und der Einlaufstern 12 synchron mit einander und auch synchron mit dem Rotor 6 angetrieben werden, also die Rotation der Einlaufschnecke 11 u.a. zeitlich und auch geschwindigkeitsmäßig genau auf die Rotation des Einlaufsternes 12 abgestimmt ist. Ferner ist auch erforderlich, dass die Dreh- oder Winkelstellung der Rotationsbewegung Einlaufschnecke 11 sehr genau auf die Dreh- oder Winkelstellung des Einlaufsternes 12 abgestimmt und die Einlaufschnecke 11 weiterhin generell so positioniert ist, dass jede an die Übergabeposition 16 geförderte Flasche 2 dort zunächst mit einem Teilbereich ihrer Flaschenaußenfläche sowohl in dem Schneckengang 14 als auch in einer Behälteraufnahmen 17 des Einlaufsterns 12 angeordnet ist, bevor diese Flasche 2 dann mit dem umlaufenden Einlaufstern 12 weiterbewegt wird. Diese genaue Einstellung bzw. Justage der Einlaufschnecke 11 in Bezug auf den Einlaufstern 12 wird z.B. unter Verwendung einer Flasche 2 generell in der Weise durchgeführt, dass eine Behälteraufnahme 17 an die Übergabeposition 16 bewegt und in diese Behälteraufnahmen 17 die Flasche eingestellt wird. Anschließend erfolgt, soweit erforderlich, die Einstellung der Einlaufschnecke 11 in der Achse AS, insbesondere aber die Winkeleinstellung durch Verdrehen des Schneckenkörpers 13 gegenüber der Schneckenaufnahme 15 um die Achse AS in der Form, dass die bei der Einstellung verwendete Flasche 2 am Schneckenende 11.2 auch im Schneckengang 14 passend aufgenommen ist. Hierbei ist die Verbindung zwischen dem Schneckenkörper 13 und der Schneckenaufnahme 15 gelöst. In der so gewonnenen Einstellung wird dann der Schneckenkörper 13 an der Schneckenaufnahme 15 fixiert, d.h. die Verbindung zwischen dem Schneckenkörper 13 und der Schneckenaufnahme 15 wird wieder hergestellt.

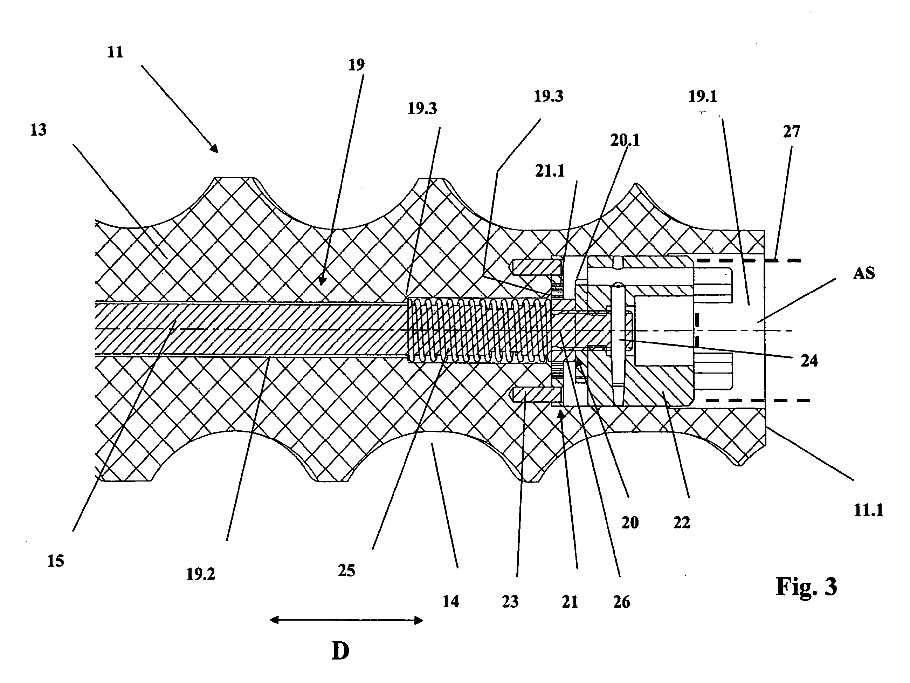

Die dorn- oder wellenartige Schneckenaufnahme 15, die in einer zwischen den Schneckenenden 11.1 und 11.2 sich erstreckenden Öffnung 19 des Schneckenkörpers 13 aufgenommen ist, ist axial relativ zum Schneckenkörper 13 verschiebbar (Doppelpfeil D), und zwar zwischen einem in der Figur 3 dargestellten nicht verriegelten Zustand, in welchem die Verbindung zwischen der Schneckenaufnahme 15 und dem Schneckenkörper 13 aufgehoben ist, und einem verriegelten Zustand, in welchem die Verbindung zwischen der Schneckenaufnahme 15 und dem Schneckenkörper 13 besteht und hierfür ein an der Schneckenaufnahme 15 vorgesehenes Kupplungselementes 20 in ein Kupplungselement 21 am Schneckenkörper 13 eingreift.

Die dorn- oder wellenartige Schneckenaufnahme 15 ist an ihrem dem Schneckenende 11.1 benachbarten Ende mit einem im Querschnitt vergrößerten Kopfstück 22 versehen, welches mit seiner die Achse AS konzentrisch umschließenden kreiszylinderförmigen Umfangsfläche an der ebenfalls kreiszylinderförmigen Umfangsfläche eines im Querschnitt vergrößerten Öffnungsabschnittes 19.1 der Öffnung 19 anliegt. An der dem Schneckenende 11.1 abgewandten Stirnseite ist das Kupplungselement 20 befestigt, welches als Zahnrad mit einer die Achse AS konzentrisch umschließenden ringförmigen Außenverzahnung 20.1 ausgebildet ist.

Das Kupplungsstück 21 ist von einem Ring gebildet, der im Öffnungsabschnitt 19.1 angeordnet ist, und zwar an einer dortigen Fläche 19.3, die von dem Übergang zwischen dem Öffnungsabschnitt 19.1 und einem Öffnungsabschnitt 19.2 mit reduziertem Querschnitt gebildet ist. Das Kupplungsstück 21 ist über Zapfen 23 im Schneckenkörper 13 verankert. Der das Kupplungsstück 21 bildende Ring ist mit einer die Achse AS konzentrisch umschließenden ringförmigen Innenverzahnung 21.1 versehen, die passend für die Außenverzahnung 20.1 ausgebildet ist, sodass in dem verriegelten Zustand, d.h. bei in dem ringförmigen Kupplungsstück 21 aufgenommenem Kupplungsstück 20 über die Verzahnungen 20.1 und 21.1 die auch antriebsmäßige Verbindung zwischen der Schneckenaufnahme 15 und dem Schneckenkörper 13 hergestellt ist, während in dem entriegelten oder nicht verriegelten Zustand sich das Kupplungsstück 20 mit seiner Verzahnung 20.1 axial versetzt außerhalb des ringförmigen Kupplungsstückes 21 befindet.

Durch den relativ großen Durchmesser des Kupplungsstückes 20 und der Ringöffnung des Kupplungsstückes 21 ergibt sich nicht nur eine optimale Ausbildung hinsichtlich der zu übertragenden Drehmomente, sondern die Verzahnungen 20.1 und 21.1 können insbesondere auch als Feinverzahnungen mit einer Vielzahl von Zähnen ausgebildet werden, sodass hierdurch eine stufenförmige Winkeleinstellung der Einlaufschnecke 11 bzw. des Schneckenkörpers 13 in kleinen Winkelschritten, beispielsweise bei Verzahnungen 20.1 und 21.1 mit jeweils einhundert Zähnen in Winkelschritten von 3,6° möglich ist. Es versteht sich von selbst, dass je nach gewünschter Genauigkeit auch abweichende Zähnezahlen gewählt werden können.
Selbstverständlich können auch weitere, dem Fachmann bekannte Kupplungseinrichtungen eingesetzt werden, beispielsweise auch solche Kupplungselemente mit stirnverzahnten Elementen, sämtliche Formen von Klemmelementen, Spannhülsen, und, bei einer entsprechenden Ausbildung des Schneckenkörpers 13 und der Schneckenaufnahme 15 auch Elemente zur Verbindung von Welle und Nabe.

Bei der in der Figur 3 dargestellten Ausführungsform ist das Kopfstück 22 mit einem Splint 24 an der, die Schneckenaufnahme 15 bildenden Welle befestigt. Auch andere Ausführungen sind denkbar.

Mit 25 ist eine Druckfeder bezeichnet, die die Schneckenaufnahme 15 bildende Welle umschließt und sich mit einem Ende gegen einen Absatz oder Bund 19.4 des Öffnungsabschnitts 19.2 und mit dem anderen Ende über einen Zwischenring 26 am Kopfstück 22 bzw. an dem dortigen Kupplungsstück 20 abstützt. Durch die Druckfeder 25 sind die Schneckenaufnahme 15 und damit auch das Kupplungselement 20 in den nicht verriegelten Zustand vorgespannt, in dem die Winkeleinstellung durch Drehen des Schneckenkörpers 13 relativ zu Schneckenaufnahme 15 vorgenommen werden kann. Nach der Winkeleinstellung und während des normalen Betriebes der Behandlungsmaschine 1 ist der verriegelte Zustand zwischen der Schneckenaufnahme 15 und dem Schneckenkörper gegen die Wirkung der Druckfeder 25 aufrecht erhalten, und zwar durch ein äußeres in der Figur 3 mit der unterbrochenen Linie 27 angedeutetes Antriebselement zum Antrieb der Einlaufschnecke 11 über das Kopfstück 22. Das Antriebselement 27 ist axial derart zustellbar, dass bei am Schneckenende 11.2 abgestütztem Schneckenkörper 13 und bei durch das Antriebselement 27 gegen die Wirkung der Druckfeder 25 verschobener Schneckenaufnahme 15 die antriebsmäßigen Verbindung über die Kupplungsstücke 20 und 21 nach der Winkeleinstellung und während des normalen Betriebes der Behandlungsmaschine 1 aufrecht erhalten ist.

Bei der in der Figur 3 dargestellten Ausführungsform ist die lösbare Verbindung zwischen dem Schneckenkörper 13 und der Schneckenaufnahme 15 durch eine Kupplungseinrichtung mit den beiden zahnradartigen Kupplungselementen 20 und 21 realisiert. Auch andere Ausführungen sind denkbar, beispielsweise Ausführungen ähnlich der Ausführung der Figur 3, bei denen nur eines der beiden Kupplungselemente 20 oder 21 mit einer Vielzahl von Zähnen bzw. mit einer Verzahnung 20.1 oder 21.1 versehen ist, während das andere Kupplungselement 21 bzw. 20 anstelle einer durchgehenden Verzahnung nur einzelne zahnartige Vorsprünge besitzt.

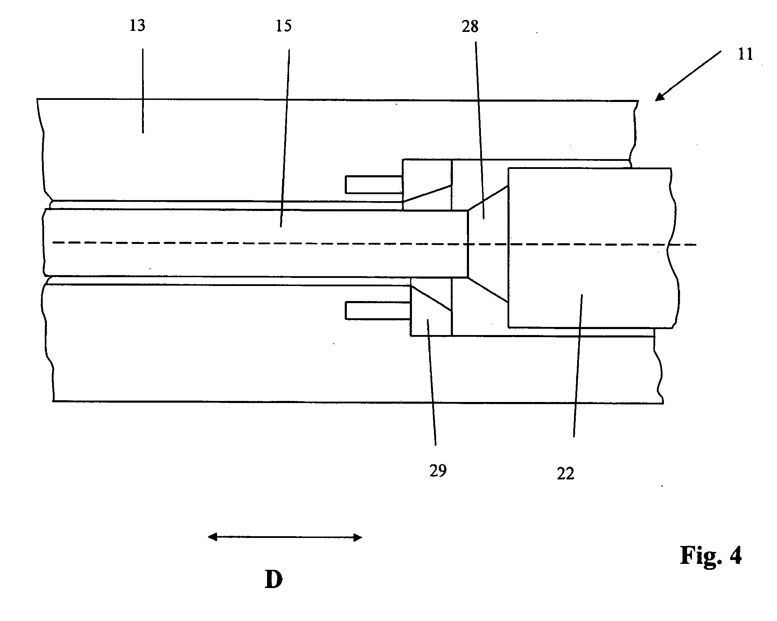

Weiterhin sind auch Kupplungseinrichtungen denkbar, bei denen die lösbare Verbindung zwischen der Schneckenaufnahme 15 und dem Schneckenkörper 13 durch Klemmen, beispielsweise durch morsekegelartiges Klemmen hergestellt ist. Bei einer solchen Ausführung ist dann, wie in der Figur 4 dargestellt, die Schneckenaufnahme 15 beispielsweise wiederum zum Verriegeln und Entriegeln ihrer Verbindung mit dem Schneckenkörper 13 axial verschiebbar (Doppelpfeil D), so dass im verriegelten Zustand ein z.B. mit einer Riffelung oder Verzahnung versehener Klemmkegel 28 an der Schneckenaufnahme 15 für eine kraft- und/oder formschlüssige Verbindung in eine vom einem Klemmring 29 gebildete passende Aufnahme am Schneckenkörper 13 eingreift und im nicht verriegelten Zustand, der in der Figur 4 gezeigt ist, diese Elemente axial zumindest so weit von einander beabstandet sind, dass die kraft- und/oder formschlüssige Verbindung aufgehoben ist.

Ist eine axiale Verstellung der Einlaufschnecke 11 erforderlich, so erfolgt dies bei der in der Figur 3 dargestellten Ausführungsform bevorzugt durch axiales Verstellen der Schneckenaufnahme 15 und/oder der axialen Abstützung für das Schneckenende 11.2.

Die Erfindung wurde vorstehend an einem Ausführungsbeispielen beschrieben. Es versteht sich, dass zahlreiche Änderungen sowie Abwandlungen möglich sind, ohne dass dadurch der der Erfindung zugrundeliegende Erfindungsgedanke verlassen wird.

Anstelle der zuvor beschriebenen Art der Winkeleinstellung der Einlaufschnecke, bei der (Art) vor der Winkeleinstellung ein Lösen der Verbindung zwischen der Einlaufschnecke 11 oder dem Schneckenkörper 13 und dem Antrieb der Einlaufschnecke 11 und nach der Winkeleinstellung diese Verbindung wieder hergestellt wird, ist es auch möglich, die Schneckenaufnahme mit einer Einstellvorrichtung für die Winkeleinstellung zu versehen. Die Schneckenaufnahme ist dann wenigstens zweiteilig ausgeführt, wobei ein Teil antriebsmäßig mit dem Schneckenantrieb verbunden ist, und ein Teil mit dem Schneckenkörper verbunden ist. Zwischen beiden Teilen ist dann die Verstellvorrichtung vorgesehen, mit der die Winkeleinstellung der Einlaufschnecke erfolgt.

Weiterhin ist es möglich, im Antriebsstrang der jeweiligen Einlaufschnecke ein Getriebe, beispielsweise ein Differenzialgetriebe vorzusehen, mit dem die Winkeleinstellung vorgenommen werden kann.

Allen Ausführungen der Erfindung ist gemeinsam, dass die jeweilige Einlaufschnecke und/oder deren Antrieb bereits mit Mitteln ausgestattet sind, die zumindest die Winkeleinstellung ermöglichen, und es daher nicht erforderlich ist, für die Winkeleinstellung Verstiftungen zwischen dem Schneckenkörper und der Schneckenaufnahme zu entfernen und nach der Winkeleinstellung die Verbindung zwischen dem Schneckenkörper und der Schneckenaufnahme durch erneutes Vorbohren und Verstiften wieder herzustellen.

Die Behandlungsmaschine 1 wurde zuvor als Etikettiermaschine beschrieben. Es versteht sich, dass unterschiedliche Behandlungsmaschinen für Flaschen oder dergleichen Behälter anwendbar sind, bei dehen die Flaschen oder Behälter an einer Behälteraufgabe wenigstens bestehend aus einer Einlaufschnecke und einem anschließenden Einlauf- oder Transportstern vereinzelt und auf einen einer Maschinenteilung entsprechenden Abstand gebracht werden. Insbesondere ist die Behälteraufgabe der Erfindung anwendbar bei Füllmaschinen, bei Maschinen zum Bedrucken von Behältern, bei Rinser, bei Inspektionsmaschinen usw.

### Bezugszeichenliste

- 1: Behandlungsmaschine
- 2: Behälter bzw. Flasche
- 3: äußerer Transporteur
- 3.1: Führungsgeländer des Transporteurs 3
- 4: Behälteraufgabe
- 5: Behandlungsposition
- 6: Rotor
- 7, 8: Etikettieraggregat
- 9: Behälterauslauf
- 10: äußerer Transporteur
- 11: Einlaufschnecke
- 11.1, 11.2: Schneckenende
- 12: Einlaufstern
- 13: Schneckenkörper
- 14: Schneckengang
- 15: Schneckenaufnahme
- 16: Übergabeposition
- 17: Behälteraufnahme
- 18: Führungsbogen
- 19: Öffnung im Schneckenkörper 13
- 19.1, 19.2: Öffnungsabschnitt
- 19.3: Fläche
- 19.4: Bund
- 20, 21: Kupplungselement
- 20.1: Außenverzahnung
- 21.1: Innenverzahnung
- 22: Kopfstück
- 23: Zapfen
- 24: Splint
- 25: Druckfeder
- 26: Zwischenring
- 27: Lager- und/oder Antriebselement
- 28: Klemmkegel
- 29: Klemmring oder Kegelring
- A: Transportrichtung des Transporteurs 3
- B: Drehrichtung des Rotors 6
- C: Transportrichtung des Transporteurs 10
- D: Relativbewegung der Schneckenaufnahme 15

## Patentansprüche

1. Behälteraufgabe (4) zur Verwendung an Behandlungsmaschinen (1) zum Behandeln von Flaschen oder dergleichen Behältern (2), mit wenigstens einer an einer Transportstrecke (3) vorgesehenen und von einer Antriebseinrichtung (27) um eine Schneckenachse (AS) umlaufend antreibbaren Einteil- oder Einlauflaufschnecke (11), die an wenigstens einem an einer Schneckenaufnahme (15) vorgesehenen Schneckenkörper (13) einen Förder- oder Schneckengang (14) für die Behälter (2) bildet, mit wenigstens einem der Einlaufschnecke (11) zugeordneten und um eine Transportsternachse umlaufend antreibbaren Transportstern (12) vorzugsweise mit einer Vielzahl von Behälteraufnahmen (17), welche in gleichmäßigen, einer Maschinenteilung entsprechenden Winkelabständen um die Transportsternachse verteilt vorgesehen sind, sowie mit einer Antriebseinrichtung zum synchronen und winkelgenauen Antrieb der wenigstens einen Einlaufschnecke (11) und des wenigstens einen Transportsternes (12), **dadurch gekennzeichnet, dass** in einem Antriebsstrang zwischen dem wenigstens einen Schneckenkörper (13) und der Antriebseinrichtung (27) Kupplungs- und/oder Einstellmittel (20, 21; 28, 29) vorgesehen sind, die eine Winkeleinstellung der Winkelstellung der Einlaufschnecke (11) und/oder des wenigsten einen Schneckenkörpers (13) relativ zur Winkelstellung des wenigstens einen Transportsternes (12) und/oder der Position der Einlaufschnecke (11) und/oder des wenigsten einen Schneckenkörpers (13) relativ zu dem wenigstens einen Transportstern (12) ermöglichen.

2. Behälteraufgabe (4) nach Anspruch 1, **dadurch gekennzeichnet, dass** die Kupplungs- und/oder Einstellmittel (20, 21; 28, 29) für ein Lösen der Verbindung zwischen den Antriebsmitteln (27) und der Einlaufschnecke (11) und/oder dem wenigstens einen Schneckenkörper (13) zur Winkeleinstellung und für ein anschließendes Wiederherstellen der Verbindung zwischen den Antriebsmitteln (27) und der Einlaufschnecke (11) und/oder dem wenigstens einen Schneckenkörper (13) nach erfolgter Winkeleinstellung ausgebildet sind.

3. Behälteraufgabe (4) nach Anspruch 2, **dadurch gekennzeichnet, dass** die Kupplungs- und/oder Einstellmittel von einer lösbaren Klemmverbindung (28, 29) und/oder von einer Kupplungseinheit (20, 21) im Antriebsstrang gebildet sind.

4. Behälteraufgabe (4) nach Anspruch 3, **dadurch gekennzeichnet, dass** die Kupplungs- und/oder Einstellmittel wenigstens zwei voneinander lösbare Kupplungselemente (20, 21) aufweist, von denen wenigstens ein Kupplungselement mit einer Vielzahl von Rasten und/oder Zähnen (20.1, 21.1) und ein Kupplungselement mit wenigstens einer mit den Rasten und/oder Zähnen zusammenwirkenden Gegenrast, beispielsweise in Form wenigstens eines Zahns ausgebildet ist.

5. Behälteraufgabe (4) nach Anspruch 4, **dadurch gekennzeichnet, dass** die wenigstens zwei Kupplungselemente (20, 21) jeweils mit einer Verzahnung (20.1, 21.1), vorzugsweise mit einer die Achse (AS) der Einlaufschnecke (11) kreisringförmig und konzentrisch umschließenden Verzahnung versehen sind und mit diesen Verzahnungen (20.1, 21.1) bei mit der Antriebseinrichtung (27) antriebsmäßig verbundenem Schneckenkörper (13) ineinander greifen.

6. Behälteraufgabe (4) nach einem der vorhergehenden Ansprüche, **dadurch gekennzeichnet, dass** die Kupplungs- und Einstellmittel (20, 21; 28, 29) so ausgeführt sind, dass ein Lösen und Wiederherstellen der antriebsmäßigen Verbindung zwischen der Einlaufschnecke (11) und/oder dem wenigstens einen Schneckenkörper (13) und der Antriebseinrichtung (27) jeweils durch axiales Verschieben des wenigstens einen Schneckenkörpers (13) relativ zu der Schneckenaufnahme (15) erfolgen.

7. Behälteraufgabe (4) nach einem der vorhergehenden Ansprüche, **dadurch gekennzeichnet, dass** die Kupplungs- und/oder Einstellmittel (20, 21; 28, 29) durch Federmittel (25) in eine die antriebsmäßige Verbindung zwischen der Einlaufschnecke (11) und/oder dem wenigstens einen Schneckenkörper (13) und der Antriebseinrichtung (27) unterbrechenden Zustand vorgespannt sind.

8. Behälteraufgabe (4) nach einem der vorhergehenden Ansprüche, **dadurch gekennzeichnet, dass** die Kupplungs- und/oder Einstellmittel (20, 21; 28, 29) zwischen dem wenigstens einen Schneckenkörper (13) und der Schneckenaufnahme (15) vorgesehen sind.

9. Behälteraufgabe (4) nach einem der vorhergehenden Ansprüche, **dadurch gekennzeichnet, dass** die Kupplungs- und/oder Einstellmittel von einer Einstellvorrichtung der Schneckenaufnahme (15) gebildet sind.

10. Behälteraufgabe (4) nach einem der vorhergehenden Ansprüche, **dadurch gekennzeichnet, dass** die Kupplungs- und/oder Einstellmittel von einem eine Drehwinkeleinstellung ermöglichenden Getriebe im Antriebsstrang, beispielsweise von einem Differenzial-Getriebe gebildet sind.

11. Behälteraufgabe (4) nach einem der vorhergehenden Ansprüche, **dadurch gekennzeichnet, dass** die Schneckenaufnahme (15) wellen- oder domartig ausgebildet ist, und dass der wenigstens eine Schneckenkörper (13) auf der Schneckenaufnahme (15) diese zumindest auf einer Teillänge umschließend angeordnet ist.

## Claims

1. Container feeding means (4) for use in treatment machines (1) for the treatment of bottles or similar containers (2), with at least one distributing or inlet worm (11) which is provided on a transport path (3) and can be driven by a drive device (27) in circulation about a worm axis (AS), which worm at least at a worm body (13) provided at a worm receptacle (15) forms a conveyor or worm screw path (14) for the containers (2), with at least one transport star (12) which is associated with the inlet worm (11) and can be driven in circulation about a transport star axis, preferably with a plurality of container holders (17) which are provided distributed at even angular intervals corresponding to a machine pitch about the transport star axis, and with a drive device for synchronous and angle-accurate drive of the at least one inlet worm (11) and the at least one transport star (12), **characterised in that** coupling and/or adjustment means (20, 21; 28, 29) are provided in a drive train between the at least one worm body (13) and the drive device (27), which means allow an angular adjustment of the angular position of the inlet worm (11) and/or the at least one worm body (13) relative to the angular position of the at least one transport star (12) and/or the position of the inlet worm (11) and/or the at least one worm body (13) relative to the at least one transport star (12).

2. Container feeding means (4) according to claim 1, **characterised in that** the coupling and/or adjustment means (20, 21; 28, 29) are formed for releasing the connection between the drive means (27) and the inlet worm (11) and/or the at least one worm body (13) for angular adjustment, and for subsequently recreating the connection between the drive means (27) and the inlet worm (11) and/or the at least one worm body (13) after angular adjustment.

3. Container feeding means (4) according to claim 2, **characterised in that** the coupling and/or adjustment means are formed by a releasable clamp connection (28, 29) and/or by a coupling unit (20, 21) in the drive train.

4. Container feeding means (4) according to claim 3, **characterised in that** the coupling and/or adjustment means comprise at least two coupling elements (20, 21) which can be released from each other, of which at least one coupling element is formed with a plurality of hooks and/or teeth (20.1, 21.1) and one coupling element is formed with at least one counterhook, for example in the form of at least one tooth, which cooperates with the hooks and/or teeth.

5. Container feeding means (4) according to claim 4, **characterised in that** the at least two coupling elements (20, 21) are each fitted with a toothing (20.1, 21.1), preferably with a toothing concentrically surrounding the axis (AS) of the inlet worm (11) in the manner of a circular ring, and intermesh with these toothings (20.1, 21.1) when the worm body (13) is connected for drive purposes with the drive device (27).

6. Container feeding means (4) according to any one of the preceding claims, **characterised in that** the coupling and adjustment means (20, 21; 28, 29) are designed such that the drive connection between the inlet worm (11) and/or the at least one worm body (13) and the drive device (27) is released and recreated by axial displacement of the at least one worm body (13) relative to the worm receptacle (15).

7. Container feeding means (4) according to any one of the preceding claims, **characterised in that** the coupling and/or adjustment means (20, 21; 28, 29) are pretensioned by spring means (25) in a state interrupting the drive connection between the inlet worm (11) and/or the at least one worm body (13) and the drive device (27).

8. Container feeding means (4) according to any one of the preceding claims, **characterised in that** the coupling and/or adjustment means (20, 21; 28, 29) are provided between the at least one worm body (13) and the worm receptacle (15).

9. Container feeding means (4) according to any one of the preceding claims, **characterised in that** the coupling and/or adjustment means are formed by an adjustment device of the worm receptacle (15).

10. Container feeding means (4) according to any one of the preceding claims, **characterised in that** the coupling and/or adjustment means are formed by a gear mechanism in the drive train which allows a rotary angle adjustment, for example by a differential gear mechanism.

11. Container feeding means (4) according to any one of the preceding claims, **characterised in that** the worm receptacle (15) is formed in the manner of a wave or dome, and that the at least one worm body (13) is arranged on the worm receptacle (15) surrounding this at least over a part length.

## Revendications

1. Système d'alimentation en récipients (4) destiné à être utilisé sur des machines de traitement (1) pour le traitement de bouteilles ou récipients similaires (2) avec au moins une vis sans fin de triage ou d'entrée (11) prévue sur un trajet de transport (3) et pouvant être entraînée en rotation par un dispositif d'entraînement (27) autour d'un axe de vis sans fin (AS), qui forme, sur au moins un corps de vis sans fin (13) prévu sur un logement de vis sans fin (15), un passage de transport ou de vis sans fin (14) pour les récipients (2), avec au moins une étoile de transport (12) associée à la vis sans fin d'entrée (11) et pouvant être entraînée en rotation autour d'un axe d'étoile de transport, de préférence avec une pluralité de logements de récipients (17) qui sont prévus répartis autour de l'axe d'étoile de transport à distances angulaires régulières, correspondant à un pas de machine, ainsi qu'avec un dispositif d'entraînement pour l'entraînement synchrone et précis en angle de l'au moins une vis sans fin d'entrée (11) et de l'au moins une étoile de transport (12), **caractérisé en ce que** dans un tronçon d'entraînement entre l'au moins un corps de vis (13) et le dispositif d'entraînement (27) sont prévus des moyens de couplage et/ou de réglage (20, 21 ; 28, 29) qui permettent un réglage angulaire de la position angulaire de la vis sans fin d'entrée (11) et/ou de l'au moins un corps de vis sans fin (13) par rapport à la position angulaire de l'au moins une étoile de transport (12) et/ou de la position de la vis sans fin d'entrée (11) et/ou de l'au moins un corps de vis (13) par rapport à l'au moins une étoile de transport (12).

2. Système d'alimentation en récipients (4) selon la revendication 1, **caractérisé en ce que** les moyens de couplage et/ou de réglage (20, 21 ; 28, 29) sont réalisés pour un détachement de la liaison entre les moyens d'entraînement (27) et la vis sans fin d'entrée (11) et/ou l'au moins un corps de vis sans fin (13) pour le réglage angulaire et pour un rétablissement consécutif de la liaison entre les moyens d'entraînement (27) et la vis sans fin d'entrée (11) et/ou l'au moins un corps de vis sans fin (13) une fois le réglage angulaire réalisé.

3. Système d'alimentation en récipients (4) selon la revendication 2, **caractérisé en ce que** les moyens de couplage et/ou de réglage sont formés par une liaison de serrage (28, 29) détachable et/ou par une unité de couplage (20, 21) dans le tronçon d'entraînement.

4. Système d'alimentation en récipients (4) selon la revendication 3, **caractérisé en ce que** les moyens de couplage et/ou de réglage présentent au moins deux éléments de couplage (20, 21) détachables, dont au moins un élément de couplage est réalisé avec une pluralité de crans et/ou de dents (20.1, 21.1) et un élément de couplage avec au moins un cran antagoniste coagissant avec les crans et/ou les dents, par exemple sous la forme d'au moins une dent.

5. Système d'alimentation en récipients (4) selon la revendication 4, **caractérisé en ce que** les au moins deux éléments de couplage (20, 21) sont pourvus respectivement d'une denture (20.1, 21.1), de préférence d'une denture entourant de manière circulaire et concentrique l'axe (AS) de la vis sans fin d'entrée (11) et s'engagent avec ces dentures (20.1, 21.1) lorsque le corps de vis sans fin (13) est relié en entraînement avec le dispositif d'entraînement (27).

6. Système d'alimentation en récipients (4) selon l'une quelconque des revendications précédentes, **caractérisé en ce que** les moyens de couplage et de réglage (20, 21 ; 28, 29) sont réalisés de sorte qu'un détachement et rétablissement de la liaison en entraînement entre la vis sans fin d'entrée (11) et/ou l'au moins un corps de vis sans fin (13) et le dispositif d'entraînement (27) soient réalisés respectivement par un déplacement axial de l'au moins un corps de vis (13) par rapport au logement de vis (15).

7. Système d'alimentation en récipients (4) selon l'une quelconque des revendications précédentes, **caractérisé en ce que** les moyens de couplage et/ou de réglage (20, 21 ; 28, 29) sont précontraints par des moyens de ressort (25) dans un état interrompant la liaison en entraînement entre la vis sans fin d'entrée (11) et/ou l'au moins un corps de vis sans fin (13) et le dispositif d'entraînement (27).

8. Système d'alimentation en récipients (4) selon l'une quelconque des revendications précédentes, **caractérisé en ce que** les moyens de couplage et/ou de réglage (20, 21 ; 28, 29) sont prévus entre l'au moins un corps de vis sans fin (13) et le logement de vis sans fin (15).

9. Système d'alimentation en récipients (4) selon l'une quelconque des revendications précédentes, **caractérisé en ce que** les moyens de couplage et/ou de réglage sont formés par un dispositif de réglage du logement de vis sans fin (15).

10. Système d'alimentation en récipients (4) selon l'une quelconque des revendications précédentes, **caractérisé en ce que** les moyens de couplage et/ou de réglage sont formés par un engrenage permettant un réglage d'angle de rotation dans le tronçon d'entraînement, par exemple par un engrenage différentiel.

11. Système d'alimentation en récipients (4) selon l'une quelconque des revendications précédentes, **caractérisé en ce que** le logement de vis sans fin (15) est réalisé en forme d'arbre ou de mandrin et **en ce que** l'au moins un corps de vis sans fin (13) est disposé sur le logement de vis (15) entourant celui-ci au moins sur une longueur partielle.
